# EUROPÄISCHE PATENTANMELDUNG

(11) **EP 0 880 994 A2**
(43) Veröffentlichungstag der Anmeldung: **02.12.1998**
(21) Anmeldenummer: 98890122.9
(22) Anmeldetag: 28.04.1998
(51) Int. Cl.: B01J 2/04, B01D 1/18

(54) **Vorrichting zum Erzeugen von Granulat**

(30) Priorität: 28.05.1997 AT 913/97
(71) Anmelder: Johann Stari Gesellschaft m.b.H., 2352 Gumpoldskirchen (AT)
(72) Erfinder: Frantl, Erich, Ing., 1080 Wien (AT); Stari, Johannes, Ing., 2352 Gumpoldskirchen (AT)
(74) Vertreter: Beer, Manfred, Dipl.-Ing.

(57) **Zusammenfassung**

Zum Herstellen von Granulat aus einem schmelzflüssigen, zu einem festen Aggregatzustand erstarrenden Material ist eine Vorrichtung vorgesehen, die ineinandergesetzt zwei, zueinander koaxiale Trommeln 1 und 7 aufweist. In den Umfangswänden der Trommeln 1 und 7 sind Öffnungen 2 bzw. 8 vorgesehen. Das durch die Rotation der Trommeln 1 und 7 in Drehung versetzte Material kann unter der Wirkung der Zentrifugalkraft durch die Öffnungen 2 und 8 aus den Trommeln 1 und 7 austreten.

Um den Austritt von Material aus den Trommeln 1 und 7 intermittierend zu gestalten, so daß das Material zu Granulat erstarrt, nachdem es aus den Trommeln 1 und 7 ausgetreten ist, werden die Trommeln 1 und 7 vorzugsweise in der gleichen Drehrichtung, jedoch mit unterschiedlicher Drehgeschwindigkeit angetrieben, so daß die Öffnungen 2 in der Umfangswand der äußeren Trommel 1 von den zwischen den Öffnungen 8 in der Umfangswand der inneren Trommel 7 liegenden Umfangswandbereichen periodisch verschlossen und wieder freigegeben werden.

Durch Wahl der Drehgeschwindigkeit und der Relativdrehgeschwindigkeit der Trommeln 1 und 7 kann der Materialaustritt und die Granulatgröße eingestellt werden.

Mit der erfindungsgemäßen Vorrichtung lassen sich alle flüssigen, fest werdenden Werkstoffe verarbeiten, wobei sowohl physikalisches Aushärten (Erstarren durch Temperaturabsenkung) als auch chemisches Aushärten (Vernetzen) möglich ist. Auch Werkstoffe, die durch Verdunsten eines Lösungsmittels fest werden, können in der erfindungsgemäßen Vorrichtung zu Granulat verarbeitet werden.

## Beschreibung

Die Erfindung betrifft eine Vorrichtung, mit welcher aus im Verarbeitungszustand flüssigem Material im Endzustand festes Granulat mit weitgehend gleichmäßiger Korngröße hergestellt werden kann.

Üblicherweise wird Granulat zum Beispiel im Sprühverfahren mit Zerstäubern oder durch mechanisches Zerkleinern von festem Material bzw. durch mechanische Portionierung von flüssigem oder zähflüssigem Material hergestellt. Während erstere Methode keine gleichmäßige Korngröße garantiert, hat zweitere Methode den Nachteil einer zu geringen Ausstoßleistung, trotz relativ hoher Kosten der für das Durchführen des Verfahrens benötigten Vorrichtungen.

Die Erfindung liegt die Aufgabe zu Grunde, eine Vorrichtung zu schaffen, mit der eine gleichmäßige Granulatgröße und eine hohe Verarbeitungsleistung bei geringen Kosten der Vorrichtung möglich ist.

Erfindungsgemäß wird dies mit einer Vorrichtung mit den Merkmalen des Anspruches 1 erreicht.

Vorteilhafte und bevorzugte Ausführungsformen sind Gegenstand der Unteransprüche.

Weitere Vorteile und Einzelheiten der Erfindung ergeben sich aus der nachstehenden Beschreibung von Ausführungsbeispielen, in welcher auf die Zeichnungen Bezug genommen wird. Es zeigt:

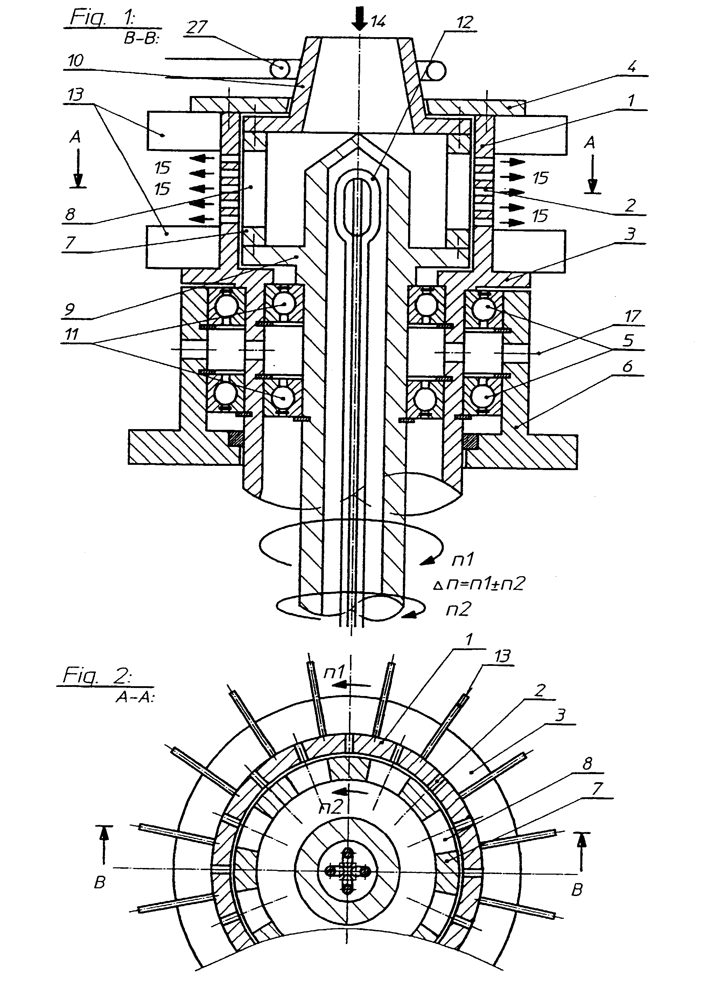

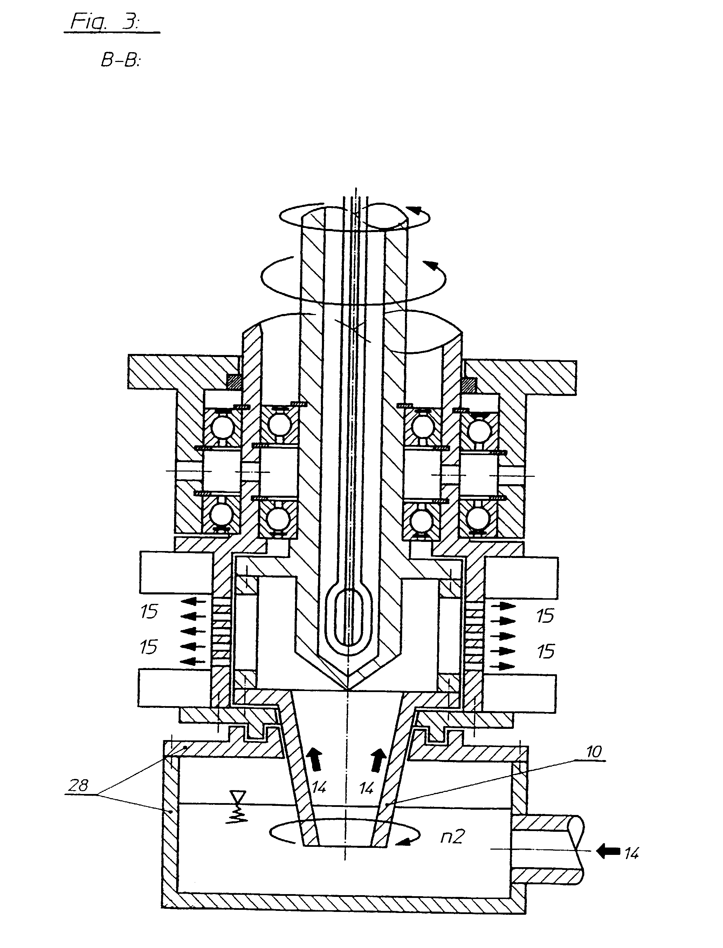

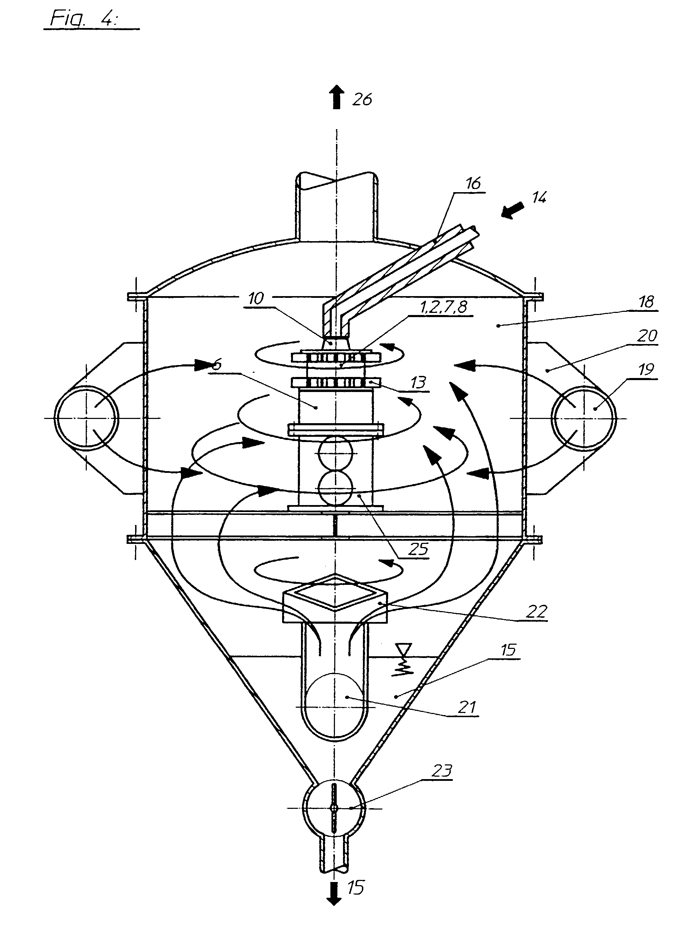

Fig. 1 im Schnitt nach Linie B-B in Fig. 2 eine erste Ausführungsform, Fig. 2 einen Schnitt nach Linie A-A in Fig. 1, Fig. 3 im Schnitt eine zweite Ausführungsform und Fig. 4 schematisiert eine Gesamtanlage zum Herstellen von Granulat.

Die Änderung des Aggregatzustandes des Materials von der flüssigen in die feste Form kann sowohl durch Absenken der Materialtemperatur unter den Schmelzpunkt, als auch durch Trocknen in einem Gasstrom, insbesondere in einem Luftstrom, aber auch in einer Kombination beider Möglichkeiten erfolgen. Auch chemisch aushärtendes Material (z.B. Vernetzung) ist in der erfindungsgemäßen Vorrichtung zu Granulat verarbeitbar.

Die Vorrichtung gemäß der Erfindung, die in Figur 1 und 2 beispielhaft und schematisch dargestellt ist, beruht auf der Ausnützung der Zentrifugalkraft einer sich rasch drehenden Trommel 1 mit Löchern 2 in regelmäßigen Abständen über- und nebeneinander in ihrer Umfangwand. Die Trommel 1 ist über Führungslager 5 in einem Lagerkörper 6 gelagert und wird durch eine Hohlwelle 3 angetrieben. Ein Abdeckflansch 4 hindert das in die Trommel 1 einfließende Material (Pfeil 14) am Ausfließen über den Trommelrand.

In der Trommel 1 rotiert eine weitere Trommel 7, die in ihrer Umfangswand mit regelmäßigen Abständen voneinander Durchbrüche 8 aufweist. Die Trommel 7 wird ebenfalls durch eine Hohlwelle 9 angetrieben, die konzentrisch zur Hohlwelle 3 über Lagerkörper 11 geführt ist. Der Abdeckflansch 10 der inneren Trommel 7 ist bevorzugt als Einlauftrichter 10 für flüssiges Material ausgebildet.

In die Hohlwelle 9 der inneren Trommel 7 kann bei Bedarf zur Temperaturregelung eine Heizung 12 eingeführt werden. In diesem Fall können die Lager 5 und 11 und die Hohlwellen 3 und 9 über Ölleitungen 17 gekühlt werden. Auch die äußere Trommel 1 bzw. der Einfüllstutzen 10 kann über eine, die Teile umgebende Heizwendel 27, z.B. in Form einer wassergekühlten Hochfrequenzspule beheizt werden.

Am oberen und am unteren Rand der äußeren Trommel 1 können mitrotierende Flügel 13 angebracht sein, welche die Luft oder die Gase um die Trommel 1 in Drehung versetzen.

Die beschriebene Vorrichtung gemäß der Erfindung arbeitet wie folgt: Flüssiges Material wird durch die schnell rotierenden Trommeln 1 und 7 in Drehung versetzt, steigt durch die Zentrifugalkraft an den Trommelwänden auf und tritt über die Durchbrüche 8 der inneren Trommel 7 und durch die Löcher 2 der äußeren Trommel 1 aus. Die Löcher 2 in der äußeren Trommel 1 werden jedoch durch die mit gleichem Drehsinn, jedoch mit einer (geringfügig) anderen Geschwindigkeit rotierende, innere Trommel 7 periodisch verschlossen, nämlich immer dann, wenn die zwischen Durchbrüchen 8 liegenden Teile der Umfangswand der inneren Trommel 7 die Löcher 2 der äußeren Trommel 1 abdecken.

So kann durch die Größe der Löcher 2 der Trommel 1, die Größe der Durchbrüche 8 der Trommel 7 und/oder durch die Differenz der Drehzahlen (n1 und n2) der Trommeln 1 und 7 die Granulat-Größe der in Richtung der Pfeile 15 austretenden Granulatteilchen definiert werden. Bei höherer Drehzahl oder größerem Durchmesser der Trommeln 1 und 7 kann auch die Durchflußmenge erhöht werden und durch die höhere Zentrifugalkraft auch dickflüssiges bis zähweiches Material verarbeitet werden.

In einer abgeänderten Ausführungsform kann die innere Trommel 7 mit Löchern 2 und die äußere Trommel 1 mit Durchbrüchen 8 versehen sein.

Fig. 3 zeigt schematisch eine andere Ausführungsform, bei welcher der konische Einfülltrichter 10 durch die Zentrifugalkraft Material in Richtung des Pfeiles 14 aus einem Bad in einem geschlossenen Gefäß 28 mit Materialzulauf aufnimmt (ansaugt). Dies kann bei bestimmtem Materialien wegen Gasbildung oder rascher Oxidation an der Oberfläche mit eventueller Schlackenbildung oder wegen der Erhaltung hoher Schmelzetemperaturen oder dem Ausschluß von Sauerstoff bzw. der Belüftung mit Stickstoff oder anderen Gasen vorteilhaft oder notwendig sein.

Fig. 4 zeigt eine erfindungsgemäße Vorrichtung mit einer Antriebseinheit 25 in einem Zyklonkessel 18, wobei der Materialzulauf (Pfeil 14) wie dargestellt entweder von oben, über eine Leitung 16, oder wie in Fig. 3 dargestellt von unten her erfolgen kann. Granulat tritt aus den Löchern 2 der äußeren Trommel 1 aus und wird durch die im Zyklonkessel 18 rotierende Luft oder die rotierenden Gase aus seiner radialen Bewegung in eine (tangentiale) Umlaufbahn abgelenkt. Die Außenatmosphäre wird sowohl durch die sich mit der Trommel 1 - drehenden Flügel 13 als auch durch die um den Zyklonmantel angeordnete Ringleitung 19 mit tangential gerichteten Einblasöffnungen 20 für Luft oder Gas zu Kühlung bzw. Trocknung, in Drehung versetzt. Luft/Gas wird über eine zentrale Ausblasöffnung 26 aus dem Zyklonkessel 18 nach oben ausgeblasen. Durch die rotierende Luft oder das rotierende Gas werden die Granulatteilchen abgekühlt und/oder getrocknet. Feinteile werden zur Ausblasöffnung 26 abgeführt. Dem zu raschen Absinken von Granulat wirkt ein von unten, über eine Leitung 21 eingeblasener, durch Leitbleche 22 ebenfalls in gleichgerichtete Rotation versetzter Luft/Gasstrom entgegen, so daß je nach Zyklonhöhe und Einsatz der Luft/Gastemperatur und Menge, z.B. durch Mischung mit flüssigem Stickstoff, eine Verfestigung des Granulates gewährleistet ist bevor es in den Abfüllsumpf mit Sperrschieber 23 gelangt. Die nach oben entweichenden Gase können nach Filtern und Wiederaufbereiten in den Kreislauf zurückgeführt werden.

Zusammenfassend kann ein bevorzugtes Ausführungsbeispiel der erfindungsgemäßen Vorrichtung zum Erzeugen von Granulat wie folgt beschrieben werden:

Zum Herstellen von Granulat aus einem schmelzflüssigen, zu einem festen Aggregatzustand erstarrenden Material ist eine Vorrichtung vorgesehen, die ineinandergesetzt zwei, zueinander koaxiale Trommeln 1 und 7 aufweist. In den Umfangswänden der Trommeln 1 und 7 sind Öffnungen 2 bzw. 8 vorgesehen. Das durch die Rotation der Trommeln 1 und 7 in Drehung versetzte Material kann unter der Wirkung der Zentrifugalkraft durch die Öffnungen 2 und 8 aus den Trommeln 1 und 7 austreten.

Um den Austritt von Material aus den Trommeln 1 und 7 intermittierend zu gestalten, so daß das Material zu Granulat erstarrt, nachdem es aus den Trommeln 1 und 7 ausgetreten ist, werden die Trommeln 1 und 7 vorzugsweise in der gleichen Drehrichtung, jedoch mit unterschiedlicher Drehgeschwindigkeit angetrieben, so daß die Öffnungen 2 in der Umfangswand der äußeren Trommel 1 von den zwischen den Öffnungen 8 in der Umfangswand der inneren Trommel 7 liegenden Umfangswandbereichen periodisch verschlossen und wieder freigegeben werden.

Durch Wahl der Drehgeschwindigkeit und der Relativdrehgeschwindigkeit der Trommeln 1 und 7 kann der Materialaustritt und die Granulatgröße eingestellt werden.

Mit der erfindungsgemäßen Vorrichtung lassen sich alle flüssigen, fest werdenden Werkstoffe verarbeiten, wobei sowohl physikalisches Aushärten (Erstarren durch Temperaturabsenkung) als auch chemisches Aushärten (Vernetzen) möglich ist. Auch Werkstoffe, die durch Verdunsten eines Lösungsmittels fest werden, können in der erfindungsgemäßen Vorrichtung zu Granulat verarbeitet werden.

## Patentansprüche

1. Vorrichtung zum Herstellen aus Granulat aus im Verarbeitungszustand flüssigen Werkstoff, gekennzeichnet durch zueinander koaxiale, ineinander angeordnete Trommeln (1, 7), die mit einem Antrieb zum Drehen der Trommeln (1, 7) mit unterschiedlicher Geschwindigkeit um eine gemeinsame Achse gekuppelt sind und die an ihren Umfangswänden Öffnungen (2, 8) für den im Verarbeitungszustand flüssigen Werkstoff aufweisen, der nach dem Durchtritt durch die Öffnungen (2, 8) zu einem festen Granulat erstarrt, und durch eine Aufgabeöffnung zum Aufgeben von flüssigem Werkstoff in die innere (7) der Trommeln (1, 7).

2. Vorrichtung nach Anspruch 1, dadurch gekennzeichnet, daß die Öffnungen (8) in der Umfangswand der inneren Trommel (7) und die Öffnungen (2) in der Umfangswand der äußeren Trommel (1) über den Umfang der Trommeln (7, 1) gleichmäßig verteilt angeordnet sind.

3. Vorrichtung nach Anspruch 1 oder 2, dadurch gekennzeichnet, daß die Öffnungen in der Umfangswand der inneren Trommel (7) in Richtung der Achse der Trommel (7) ausgerichtete Schlitze (8) sind.

4. Vorrichtung nach einem der Ansprüche 1 bis 3, dadurch gekennzeichnet, daß die Öffnungen in der Umfangswand der äußeren Trommel (1) Löcher (2) sind.

5. Vorrichtung nach Anspruch 1 oder 2, dadurch gekennzeichnet, daß die Öffnungen in der Umfangswand der inneren Trommel Löcher sind.

6. Vorrichtung nach Anspruch 1 oder 2, dadurch gekennzeichnet, daß die Öffnungen in der Umfangswand der äußeren Trommel in Richtung der Achse der Trommel ausgerichtete Schlitze sind.

7. Vorrichtung nach Anspruch 4 oder 5, dadurch gekennzeichnet, daß in der Umfangswand der inneren oder äußeren Trommel (1, 7) in Richtung der Achse gesehen nebeneinander mehrere Reihen von Löchern (2) vorgesehen sind.

8. Vorrichtung nach einem der Ansprüche 1 bis 7, dadurch gekennzeichnet, daß an der Außenseite der Umfangswand der äußeren Trommel (1) radial abstehende Flügel (13) vorgesehen sind.

9. Vorrichtung nach einem der Ansprüche 1 bis 8, dadurch gekennzeichnet, daß der inneren Trommel (7) eine Heizung (12) zugeordnet ist.

10. Vorrichtung nach einem der Ansprüche 1 bis 9, dadurch gekennzeichnet, daß von einem Ende der äußeren Trommel (1) eine Hohlwelle (3) ausgeht, an welcher der Antrieb für das Drehen der äußeren Trommel (1) angreift.

11. Vorrichtung nach einem der Ansprüche 1 bis 10, dadurch gekennzeichnet, daß von einem Ende der inneren Trommel (7) eine Hohlwelle (9) ausgeht, an welcher der Antrieb zum Drehen der inneren Trommel (7) angreift.

12. Vorrichtung nach einem der Ansprüche 1 bis 11, dadurch gekennzeichnet, daß die äußere Trommel (1) über einen Ansatz (3) in einem Lagerkörper (6) gelagert ist.

13. Vorrichtung nach Anspruch 12, dadurch gekennzeichnet, daß die innere Trommel (7) über einen Ansatz (9) an dem Ansatz (3) der äußeren Trommel drehbar gelagert ist.

14. Vorrichtung nach Anspruch 12 oder 13, dadurch gekennzeichnet, daß die Ansätze (3, 9) der Trommeln, über welche diese gelagert sind, die Hohlwellen (3, 9) sind.

15. Vorrichtung nach einem der Ansprüche 1 bis 14, dadurch gekennzeichnet, daß die Beschickungsöffnung der inneren Trommel (7) als sich nach innen konisch erweiternder Einfüllstützen (10) ausgebildet ist.

16. Vorrichtung nach Anspruch 15, dadurch gekennzeichnet, daß dem Einfüllstutzen (10) eine Heizung (27) zugeordnet ist.

17. Vorrichtung nach einem der Ansprüche 1 bis 16, dadurch gekennzeichnet, daß die Öffnungen (8) in der Umfangswand der inneren Trommel (7) in Umfangsrichtung gesehen breiter sind als die Öffnungen (2) in der Umfangswand der äußeren Trommel (1).

18. Vorrichtung nach einem der Ansprüche 1 bis 17, dadurch gekennzeichnet, daß die Trommeln (1, 7) einschließlich ihres Drehantriebes (25) in einem Zyklon (18) angeordnet sind.

19. Vorrichtung nach Anspruch 18, dadurch gekennzeichnet, daß rings um den zylindrischen Teil der Außenwand des Zyklons (18) eine Ringleitung (19) mit tangentialen Einblasöffnungen (20) für Gas, insbesondere Luft, vorgesehen ist.

20. Vorrichtung nach Anspruch 18 oder 19, dadurch gekennzeichnet, daß im von der Austragöffnung (15) sich nach oben hin zum zylindrischen Abschnitt des Zyklons (18) erweiterten konischen Abschnitt desselben eine Leitung (21) zum Einblasen von Gas mit von unten nach oben gerichteter, rotierender Strömung vorgesehen ist.

21. Vorrichtung nach einem der Ansprüche 18 bis 20, dadurch gekennzeichnet, daß die Beschickungsöffnung (10) für die innere Trommel (7) mit einer durch die obere Abschlußwand des Zyklons (18) geführten Leitung (16) für das flüssige Material verbunden ist.
